# EUROPEAN PATENT SPECIFICATION

(11) **EP 2 476 734 B1**
(45) Date of publication and mention of the grant of the patent: **01.11.2017**
(21) Application number: 12150207.4
(22) Date of filing: 04.01.2012
(51) Int. Cl.: C09D 13/00

(54) **TRANSPARENCY SOLID MARKER**
TRANSPARENTER FESTER MARKER
MARQUEUR SOLIDE TRANSPARENT

(30) Priority: 14.01.2011 KR 20110003966; 31.10.2011 KR 20110112330
(43) Date of publication of application: 18.07.2012
(73) Proprietor: Dong-A Teaching Materials Co., Ltd., Daedeok-gu Daejon (KR)
(72) Inventor: Jung, Han-Shin, DAEJON (KR); Kim, Hak-Jae, Daejeon 306-802 (KR)
(74) Representative: Delorme, Nicolas

(56) References cited:
- US-A- 5 336 307
- US-A1- 2007 204 760

## Description

### BACKGROUND OF THE INVENTION

### (a) Field of the Invention

The present invention relates to a transparent solid marker. More particularly, the present invention relates to a transparent solid marker that maintains the sense of smooth writing, is suitable for marking an important portion, and does not cause spreading of a writing surface even if it is coated on a surface which is written on by oily writing implements.

### (b) Description of the Related Art

In general, since a crayon uses wax such as paraffin as a solidifying agent, writing resistance is high, and since a coated surface is not cured, defects such as stains or discoloration occur. In addition, it is impossible to make the content thereof transparent.

Meanwhile, a pastel does not include wax and oil, and is a low concentration aqueous adhesive component that is obtained by solidifying powders such as pigments to form a stick shape (rod shape). Since it is not attached to paper, it is necessary to fix the color by spraying a specific fixing solution with respect to written lines. In addition, the pastel spreads powder to contaminate the surroundings. Further, it is impossible to make the contents of the pastel transparent.

In order to avoid these problems, an aqueous gel stick solid portrayal material in which an alkali metal salt or an ammonium salt of aliphatic carboxylic acid is used as a gelating agent has been proposed. For example, Japanese Patent Laid-Open Publication Nos. H05-311107, H04-337372, H01-217090, US2007/204760A1 disclose related technologies.

In accordance with US5336307A, a gel-like water-bearing material comprising a water soluble metal soap and at least one of monosaccharides, oligosaccharides and polyols is also known. However, in the known solid portrayal material, stick strength is weak as compared to a wax-type crayon, and it is easy to break or bend in use. In this case, if a mixing ratio of the gelating agent is increased, it is possible to increase hardness, but softness as the stick is reduced and it is easily bent. In addition, the sense of smooth writing is reduced and remnants occur after writing. Moreover, fluidity of a sol is reduced and shaping is difficult in manufacturing.

Therefore, Korean Patent Publication No. 2009-0123631 applied by the present inventors discloses a transparent solid marker that has high stick strength, and particularly has low writing resistance, is difficult to break or bend, generates few remnants after writing, does not cause spreading of the writing surface even if it is coated on a surface that is written on by oily or aqueous writing implements, and has transparent contents.

The transparent solid marker disclosed in Korean Patent Publication No. 2009-0123631 is problematic in that it does not cause spreading of a writing surface immediately after it is coated on a surface which is written on by oily writing implements, but causes the spreading over time. In the transparent solid marker, the use of a basic pigment deteriorates color development compared to the conventional filter-type marker pens, and the use of oil deteriorates operability after approximately 1 day, even though initial operability is good in a screw-type manufactured by injecting and solidifying the material into a holder, and releasing it by screw operation.

### SUMMARY OF THE INVENTION

The present invention provides a transparent solid marker, in which a subsidiary transparency agent including one or more selected from the group consisting of sugar, lactose, maltose, amylose, amylopectin, and starch syrup is used to minimize spreading of the writing surface even if it is coated on a surface that is written on by oily writing implements, a solvent dye is used to improve color development, and a lower alcohol having 1 to 4 carbon atoms is used to improve releasing property, thereby facilitating operability.

The transparent solid marker according to one embodiment of the present invention includes 10∼70% by weight of a gel forming material including an alkali metal salt or ammonium salt of an aliphatic carboxylic acid having 8 to 36 carbon atoms; 2∼30% by weight of a transparency agent which is an aliphatic amino alcohol; 3∼60% by weight of a subsidiary transparency agent including one or more selected from the group consisting of sugar, lactose, maltose, amylose, amylopectin, and starch syrup; 0.1∼10% by weight of a dye; and 2∼30% by weight of a lower alcohol having 1 to 4 carbon atoms.

The subsidiary transparency agent may further include sugar alcohols.

Further, the sugar alcohols may be selected from the group consisting of sorbitol, xylitol, maltitol, and reduced oligosaccharides.

The subsidiary transparency agent may further include glycols.

The glycols may be selected from the group consisting of glycerin, ethylene glycol, and propylene glycol.

The dye may be a solvent dye, and the solvent dye may be a color index solvent green 7.

Further, the lower alcohol having 1 to 4 carbon atoms may be one or more selected from the group consisting of methanol, ethanol, and propanol.

Since the subsidiary transparency agent including one or more selected from the group consisting of sugar, lactose, maltose, amylose, amylopectin, and starch syrup is used in the transparent solid marker according to the present invention, it is possible to improve spreadability when it is coated on a surface that is written on by oily writing implements.

Further, the transparent solid marker according to the present invention is advantageous in that the solvent dye is used to show better color development than a fluorescent color of a filter type, and to lower the risk of discoloration due to heat during processing, and the lower alcohol is used to improve releasing property, thereby facilitating screw operation in a screw-type and smoothly performing insertion and withdrawal.

### BRIEF DESCRIPTION OF THE DRAWINGS

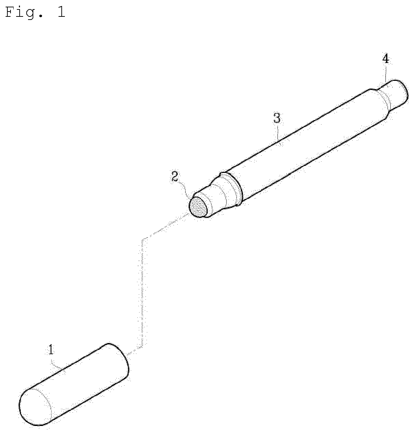

FIG. 1 is a perspective view that illustrates a structure and an exemplary use of a transparent solid marker according to the present invention.

| | |
|---|---|
| 1: Cap | 2: Transparent solid marker |
| 3: Holder | 4: Handle |

### DETAILED DESCRIPTION OF THE EMBODIMENTS

While the disclosure is susceptible to various modifications and alternative forms, specific embodiments thereof have been shown by way of example in the drawings and will herein be described in detail. It should be understood, however, that there is no intent to limit the disclosure to the particular forms disclosed, but on the contrary, the disclosure is to cover all modifications, equivalents, and alternatives falling within the disclosure. Further, when it is determined that the detailed description of the known art related to the present invention may obscure the gist of the present invention, the detailed description will be omitted.

### (1) Gel forming material

The gel forming material that is used in an exemplary embodiment according to the present invention includes an alkali metal salt or ammonium salt of an aliphatic carboxylic acid having 8∼36 carbon atoms.

The aliphatic carboxylic acid is an alkali metal salt or ammonium salt of an aliphatic carboxylic acid having 8∼36 carbon atoms, which includes or does not include branches, and particularly, the aliphatic carboxylic acid having 12 to 18 carbon atoms is preferred.

Examples of the aliphatic carboxylic acid that constitutes the aliphatic carboxylic acid salt may include a caprylic acid, a peralgonic acid, a wandicanic acid, a lauric acid, a myristeric acid, a palmitic acid, a stearic acid, an arakinic acid, a behenic acid, a lignoceric acid, a cerotic acid, a montanic acid, a mericinic acid.

In addition, examples of the alkali metal salt of the aliphatic carboxylic acid include lithium salts, sodium salts, potassium salts and particularly, sodium myristerate, sodium palmitate, sodium stearate, or mixtures thereof are preferred.

The mixing ratio of the aliphatic carboxylic acid salt is preferably 10∼70% by weight and more preferably 15∼60% by weight in the total raw material composition when the solid portrayal material according to the present invention is manufactured.

The above mixing ratio is preferable in that if the amount of the aliphatic carboxylic acid salt is 10% by weight, the solid marker is easily made hard, and it is useful in terms of formation of a gel. In addition, the strength of the stick-formed goods may be improved. Meanwhile, by setting the amount to 70% by weight or less, when it is heated and mixed, melting of the aliphatic carboxylic acid salt is easily carried out, remnants after writing are generated in a small amount, writing resistance is reduced, and fluidity in shaping is improved, such that shaping is easily carried out.

### (2) Transparency agent

In the transparent solid marker according to the present invention, if an alkoxylated nitrogen-containing compound is mixed with the raw material composition, it is possible to make the content thereof transparent.

The added alkoxylated nitrogen-containing compound is an aliphatic amino alcohol. It is preferable that it exists in a liquid state at room temperature.

As the aliphatic amino alcohol, those represented by the formula of R₁2NR₂OH, R₁N(R₃OH)₂, N(R₄OH)₃ or the like may be exemplified, and when a plurality of R₁ are present in one compound at an alkyl group having 1∼6 hydrogen atoms or carbon atoms, they may be the same as each other or different from each other. R₂OH, R₃OH and R₄OH are each an alkoxyl group having 1∼6 carbon atoms or a group that is represented by -R₅OR₆OH (herein, R₅ and R₆ are each an alkylene group, and the number of carbon atoms of R₅ and R₆ is in the range of 2∼10), and when the number thereof is plural in one compound, they may be the same as each other or different from each other.

Examples of the aliphatic amino alcohol may include ethanolamine, diethanolamine, triethanolamine, dimethylethanolamine, isopropanolamine, diisopropanolamine, triisopropanolamine, isobutanolamine, N,N-diethylethanolamine, N,N-dibutylethanolamine, N-methyl-N,N-diethanolamine, dimethylisopropanolamine, methylethanolamine, aminoethylethanolamine, ethyldiethanolamine and N,N-diisopropylethanolamine, and one or more selected from them are possible. Among them, however, it is particularly preferable to use ethanolamine, diethanolamine, triethanolamine, dimethylethanolamine, isopropanolamine, triisopropanolamine, and isobutanolamine.

The alkoxylated nitrogen-containing compound is preferably used in an amount of 2∼30% by weight, more preferably 5∼20% by weight, and most preferably 3∼15% by weight in the total raw material composition of the transparent solid marker according to the present invention.

If the amount of the alkoxylated nitrogen-containing compound is 2% by weight or less, the transparency of the content thereof is reduced, and if the amount of the alkoxylated nitrogen-containing compound is 30% by weight or more, spreading problematically occurs on a written surface that is written on by the oily writing implements.

### (3) Subsidiary transparency agent

In the transparent solid marker according to the present invention, if the raw material composition is mixed with the subsidiary transparency agent including one or more selected from the group consisting of sugar, lactose, maltose, amylose, amylopectin, and starch syrup, it is possible to increase the transparency of the content thereof, and improve spreadability when it is coated on a surface that is written on by oily writing implements. Preferably, the subsidiary transparency agent may include one or more polysaccharides selected from the group consisting of tetrasaccharides or higher saccharides in an amount of 50% by weight or more. When tetrasaccharide or higher saccharide is included in an amount of 50% by weight or more, yellowing will be lowered at a high temperature to improve transparency of the marker, and also improve spreadability.

Meanwhile, the subsidiary transparency agent may further include sugar alcohols. Herein, the sugar alcohols may be selected from the group consisting of sorbitol, xylitol, maltitol, and reduced oligosaccharides.

In addition, the subsidiary transparency agent may further include glycols. The glycols may be selected from the group consisting of glycerin, ethylene glycol, and propylene glycol, and particularly, glycerin is preferred.

The subsidiary transparency agent is used preferably in an amount of 3∼60% by weight and more preferably 7∼45% by weight in the total raw material composition of the transparent solid marker according to the present invention.

If the amount of the subsidiary transparency agent is less than 3% by weight, the transparency of the content thereof is reduced, and if the amount of the subsidiary transparency agent is more than 60% by weight, spreading problematically occurs on a written surface that is written on by the oily writing implements.

### (4) Dye

In the transparent solid marker according to the present invention, a solvent dye may be used as the dye.

The solvent dye is exemplified by a color index solvent green 7. The use of the solvent dye improves color development, compared to the use of the conventional basic dye, and also provides color development identical or similar to that of the filter-type marker pens such as felt-tip pens and highlighters. In addition, a risk of color change due to heat is lowered during a manufacturing process, compared to the conventional basic dye.

The solvent dye is preferably used in an amount of 0.1∼10% by weight and more preferably 0.2∼8% by weight in the total raw material composition of the transparent solid marker according to the present invention.

### (5) Lower alcohol

In the transparent solid marker according to the present invention, a lower alcohol having 1 to 4 carbon atoms is used in the raw material composition.

Examples of the lower alcohol may include any single one or mixtures of two or more selected from methanol, ethanol, and propanol.

When the lower alcohol is used in a screw-type manufactured by injecting and solidifying the material into a holder and releasing it by screw operation, good operability is maintained over time, thereby facilitating screw operation and smoothly performing insertion and withdrawal.

On the contrary, when oil is used instead of lower alcohol, operability is deteriorated after approximately 1 day, even though initial operability is good in a screw-type manufactured by injecting and solidifying the material into a holder, and releasing it by screw operation.

The lower alcohol is preferably used in an amount of 2∼30% by weight and more preferably 5∼20% by weight in the total raw material composition of the transparent solid marker according to the present invention.

If the amount of the lower alcohol is less than 2% by weight, operability is not improved, and if the amount of the lower alcohol is more than 30% by weight, the content is smudged upon coating.

Hereinafter, the preferred Examples of the present invention will be described in detail. However, these Examples are for illustrative purposes only, and the invention is not intended to be limited by these Examples.

The manufacturing method of the transparent solid marker according to the present invention is not particularly limited, but, for example, the marker may be manufactured by adding a gel forming material, a transparency agent, a subsidiary transparency agent, a dye, and lower alcohol to a vessel that is equipped with an agitator and a thermocouple, heating and mixing them, injecting the melted material into a mold, and cooling it. In this case, the addition order of each component is not particularly limited.

As a more detailed preparation example, components having a predetermined ratio are added to a vessel that is equipped with an agitator and a thermocouple, agitated, refluxed, heated at 90°C, and mixed. It may be manufactured by injecting the melted material into a screw-type holder, and cooling and solidifying it, or by injecting a cooled/solidified or extrusion-molded rod into a cap-attached sealing vessel.

The transparent solid marker according to an exemplary embodiment of the present invention minimizes spreading of the writing surface even if it is coated on a surface that is written on by oily writing implements, improves color development, and improves releasing property to facilitate operability, reduces writing resistance, is difficult to break or bend, hardly generates remnants after writing, and has transparent contents, compared to the conventional products.

Next, the transparent solid marker according to the present invention is provided in practice as a transparent solid marker 2 that is received in the screw-type holder 3, as shown in FIG. 1. In FIG. 1, reference numeral 4 indicates a handle for screwing, and reference numeral 1 indicates a cap for preventing drying.

### Example 1

19.5% by weight of sodium stearate, 10.0% by weight of sodium laurate, 10.0% by weight of sodium myristate, 10.0% by weight of triethanolamine, 30.0% by weight of a mixture of sugar and sorbitol, 20.0% by weight of ethanol, and 0.5% by weight of color index Solvent Green 7 were put in an agitator and agitated at 90°C for 1 hour, and the resultant melted material was injected into a screw-type holder, cooled, and solidified to obtain a yellow transparent solid marker.

### Example 2

19.0% by weight of sodium stearate, 10.5% by weight of sodium laurate, 10.0% by weight of sodium myristate, 10.0% by weight of triethanolamine, 5% by weight of sorbitol, 5% by weight of maltitol, 20.0% by weight of HG-20 (containing 70∼90% of polysaccharide of tetrasaccharides or higher saccharides, Samyang Genex Corp.), 20.0% by weight of ethanol, and 0.5% by weight of color index Solvent Green 7 were put in an agitator and agitated at 90°C for 1 hour, and the resultant melted material was injected into a screw-type holder 3, cooled, and solidified to obtain a yellow transparent solid marker according to the present invention.

### Example 3

19.5% by weight of sodium stearate, 10.0% by weight of sodium laurate, 10.0% by weight of sodium myristate, 10.0% by weight of triethanolamine, 30.0% by weight of a mixture of sugar and propylene glycol, 20.0% by weight of ethanol, and 0.5% by weight of color index Solvent Green 7 were put in an agitator and agitated at 90°C for 1 hour, and the resultant melted material was injected into a screw-type holder, cooled, and solidified to obtain a yellow transparent solid marker.

### Comparative Example 1

A transparent solid marker was obtained in the same manner as in Example 1, except that liquid paraffin was used instead of ethanol in Example 1.

### Comparative Example 2

A transparent solid marker was obtained in the same manner as in Example 1, except that glucose was used instead of the mixture of sugar and sorbitol in Example 1.

### Comparative Example 3

A transparent solid marker was obtained in the same manner as in Example 3, except that a transparency agent, triethanolamine was used instead of the mixture of sugar and propylene glycol in Example 3.

### Comparative Example 4

A transparent solid marker was obtained in the same manner as in Example 1, except that 2.0% by weight of the mixture of sugar and sorbitol and 38.0% by weight of triethanolamine were used in Example 1.

### Comparative Example 5

A transparent solid marker was obtained in the same manner as in Example 2, except that 5.0% by weight of HG-20 (containing 70∼90% of polysaccharide of tetrasaccharide or higher saccharide, Samyang Genex Corp.), 15% by weight of sorbitol, and 10% by weight of maltitol were used in Example 2.

### Experimental Example

The shaped transparent solid marker according to an exemplary embodiment of the present invention (cylinder having length of 50 mm and diameter of 11 mm) was extracted from the constant temperature chamber at 50 °C, and left at room temperature for 2 hours, and the following evaluation was carried out.

### (a) Operability

The contents obtained in Examples and Comparative Examples according to the present invention were injected into the screw-type holder 3, and solidified. After approximately 1 day, observation was performed with the naked eye and sense while the solid portrayal material 2 received in the holder 2 was released by twisting the handle 4.
┌ ○ ┘ : The material is smoothly released without need of a wrist force and friction with the holder.
┌ × ┘ : A wrist force is slightly needed and friction with the holder is shown.

### (b) Spreadability

Writing was carried out on a freesheet paper that was fixed on a balance by using an oily writing implement, and a line was drawn thereon once by using the products obtained in Examples and Comparative Examples according to the present invention while the writing pressure was controlled in the range of 3 N (306 gf) to 4 N (408 gf), which was measured by a balance. After 10 days, the spreadability of the written surface was observed by the naked eye.
┌ ⊚ ┘ : No spreading occurs on the written surface.
┌ ○ ┘ : No spreading occurs on the written surface.
┌ × ┘ : Spreading occurs on the written surface.

### (c) Color development

A line was drawn on an A4 sized paper once by using a filter-type marker pen and the transparent solid markers of Examples and Comparative Examples, so as to compare color development between the filter-type marker pen and the transparent solid markers of Examples and Comparative Examples by the naked eye.
┌ ○ ┘ : Its color development is similar or identical to that of the filter-type marker pen.
┌ × ┘ : Its color development is lower than that of the filter-type marker pen.

### (d) Transparency

The line written on a freesheet paper was observed through the contents obtained in the present invention by the naked eye.
┌ ⊚ ┘ : The written line can be clearly observed.
┌ ○ ┘ : The written line can be clearly observed.
┌ × ┘ : The written line cannot be observed or can be unclearly observed.

### (e) Remnants after writing

A freesheet paper was fixed on a balance, and a line having a length of 10 cm was drawn while writing pressure was controlled in the range of 3 N (306 gf) to 4 N (408 gf) which was measured by the balance. Particle remnants after writing were observed by the naked eye.
┌ ○ ┘ : The number of particles that can be observed by the naked eye is two or less.
┌ × ┘ : The number of particles that can be observed by the naked eye is three or more.

The evaluation results of the transparent solid markers obtained from Examples and Comparative Examples are described in the following Table 1.

**[Table 1]**

| Evaluated items | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| (a)Operability | ○ | ○ | ○ | × | ○ | ○ | ○ | ○ |
| (b) Spreadability | ○ | ⊚ | ○ | ○ | × | × | × | ○ |
| (c)Color development | ○ | ○ | ○ | ○ | ○ | ○ | ○ | ○ |
| (d)Transparency | ○ | ○ | ○ | ○ | ○ | ○ | ○ | ○ |
| (e)Remnants after writing | ○ | ○ | ○ | ○ | ○ | ○ | ○ | ○ |

As shown in Table 1, it was found that the use of lower alcohol maintained good operability at 1 day after solidification, the use of the subsidiary transparency agent including one or more selected from the group consisting of polysaccharides of disaccharides or higher saccharides prevented spreadability when it is coated on a surface that is written on by oily writing implements, and the use of solvent dye improved color development.

While this invention has been described in connection with what is presently considered to be preferred embodiments of the transparent solid marker, it is to be understood that the invention is not limited to the disclosed embodiments, but, on the contrary, is intended to cover various modifications included within the appended claims, the detailed description, and the appended drawings.

## Claims

1. A transparent solid marker comprising:
10∼70% by weight of a gel forming material that includes an alkali metal salt or ammonium salt of an aliphatic carboxylic acid having 8 to 36 carbon atoms;
2∼30% by weight of a transparency agent which is an aliphatic amino alcohol;
3∼60% by weight of a subsidiary transparency agent that includes one or more selected from the group consisting of sugar, lactose, maltose, amylose, amylopectin, and starch syrup;
0.1∼10% by weight of a dye; and
2∼30% by weight of alcohol having 1 to 4 carbon atoms.

2. The transparent solid marker according to claim 1, wherein the subsidiary transparency agent further includes sugar alcohols.

3. The transparent solid marker according to claim 2, wherein the sugar alcohol is selected from the group consisting of sorbitol, xylitol, maltitol, and reduced oligosaccharides.

4. The transparent solid marker according to any one of claims 1 to 3, wherein the subsidiary transparency agent further includes glycols.

5. The transparent solid marker according to claim 4, wherein the glycol is selected from the group consisting of glycerin, ethylene glycol, and propylene glycol.

6. The transparent solid marker according to any one of claims 1 to 5, wherein the dye is a solvent dye.

7. The transparent solid marker according to claim 6, wherein the solvent dye is a color index solvent green 7.

8. The transparent solid marker according to any one of claims 1 to 7, wherein the alcohol is one or more selected from the group consisting of methanol, ethanol, and propanol.

## Patentansprüche

1. Transparenter fester Marker, umfassend:
10∼70 Gew.-% eines gelbildenden Materials, das ein Alkalimetallsalz oder Ammoniumsalz einer aliphatischen Carbonsäure mit 8 bis 36 Kohlenstoffatomen enthält;
2∼30 Gew.-% eines Transparenzmittels, das ein aliphatischer Aminoalkohol ist;
3∼60 Gew -% eines Hilfstransparenzmittels, das ein oder mehrere enthält, die ausgewählt sind aus der Gruppe bestehend aus Zucker, Lactose, Maltose, Amylose, Amylopektin und Stärkesirup;
0,1∼10 Gew.-% eines Farbstoffs; und
2∼30 Gew.-% Alkohol mit 1 bis 4 Kohlenstoffatomen.

2. Transparenter fester Marker nach Anspruch 1, wobei das Hilfstransparenzmittel ferner Zuckeralkohole enthält.

3. Transparenter fester Marker nach Anspruch 2, wobei der Zuckeralkohol ausgewählt ist aus der Gruppe bestehend aus Sorbit, Xylit, Maltit und reduzierten Oligosacchariden.

4. Transparenter fester Marker nach einem der Ansprüche 1 bis 3, wobei das Hilfstransparenzmittel ferner Glycole enthält.

5. Transparenter fester Marker nach Anspruch 4, wobei das Glycol ausgewählt ist aus der Gruppe bestehend aus Glycerin, Ethylenglycol und Propylenglycol.

6. Transparenter fester Marker nach einem der Ansprüche 1 bis 5, wobei der Farbstoff ein Lösungsmittelfarbstoff ist.

7. Transparenter fester Marker nach Anspruch 6, wobei der Lösungsmittelfarbstoff einen Farbindex von Lösungsmittel Grün 7 ist.

8. Transparenter fester Marker nach einem der Ansprüche 1 bis 7, wobei der Alkohol einer oder mehrere ist, die ausgewählt sind aus der Gruppe bestehend aus Methanol, Ethanol und Propanol.

## Revendications

1. Marqueur solide transparent comprenant :
10 ∼ 70% en poids d'un matériau gélifiant qui comporte un sel de métal alcalin ou un sel d'ammonium d'un acide carboxylique aliphatique ayant 8 à 36 atomes de carbone ;
2 ∼ 30% en poids d'un agent de transparence qui est un amino-alcool aliphatique ;
3 ∼ 60% en poids d'un agent de transparence auxiliaire qui comporte un ou plusieurs élément(s) choisi(s) dans le groupe constitué du sucre, du lactose, du maltose, de l'amylose, de l'amylopectine et du sirop d'amidon ;
0,1 ∼ 10% en poids d'un colorant ; et
2 ∼ 30% en poids d'un alcool ayant 1 à 4 atome(s) de carbone.

2. Marqueur solide transparent selon la revendication 1,
dans lequel l'agent de transparence auxiliaire comporte en outre des alcools de sucre.

3. Marqueur solide transparent selon la revendication 2,
dans lequel l'alcool de sucre est choisi dans le groupe constitué du sorbitol, du xylitol, du maltitol et d'oligosaccharides réduits.

4. Marqueur solide transparent selon l'une quelconque des revendications 1 à 3, dans lequel l'agent de transparence auxiliaire comporte en outre des glycols.

5. Marqueur solide transparent selon la revendication 4,
dans lequel le glycol est choisi dans le groupe constitué de la glycérine, de l'éthylène glycol et du propylène glycol.

6. Marqueur solide transparent selon l'une quelconque des revendications 1 à 5, dans lequel le colorant est le colorant vert d'indice 7 du Color Index.

7. Marqueur solide transparent selon la revendication 6,
dans lequel le colorant solvant est color index : solvent green 7.

8. Marqueur solide transparent selon l'une quelconque des revendications 1 à 7, dans lequel l'alcool est un ou plusieurs élément(s) choisi(s) dans le groupe constitué du méthanol, de l'éthanol et du propanol.
